# EUROPEAN PATENT APPLICATION

(11) **EP 1 552 889 A1**
(43) Date of publication of application: **13.07.2005**
(21) Application number: 03730213.0
(22) Date of filing: 05.06.2003
(51) Int. Cl.: B05B 1/16, F16K 5/02, A01G 25/00, F16K 17/04

(54) **SELECTABLE ROTARY SPRAYER**

(30) Priority: 18.07.2002 ES 200201684
(71) Applicant: Marti Industria Metalurgica S.L., 08750 Molins des Rei, Barcelona (ES)
(72) Inventor: MARTI TUBAU, Josep, 08750 MOLINS DE REI, Barcelona (ES)
(74) Representative: Revenga Santos, Josep Luis
(86) International application number: PCT/ES2003/000271
(87) International publication number: WO 2004/009245

(57) **Abstract**

This sprayer comprises: - a shaft (1) provided with an axial inlet (11), a threaded portion (12) for the attachment of a non-drip valve (5), a radial outlet (13) and a frustoconical portion (14) widening towards the free end; - a rotary body (2) provided with a central cavity (21), two radial outlets (22, 23), a threaded inner portion (24) and recesses (25); - an annular seal (3) provided with a frustoconical inner surface (31) that contacts with the frustoconical portion (14) of the shaft (1), two radial orifices (32, 33) and appendices (34) received in recesses (25) of the body (2) and a lock nut (4).

## Description

### Object of the Invention

The present invention relates to a selectable rotary sprayer of the type having a shaft provided with an axial inlet and a radial outlet, and a rotary body mounted on the region of the shaft provided with the radial outlet; the rotary body having at least two radial outlets that can be selectively aligned with the radial outlet of the shaft, in the open position of the sprayer, and offset relative thereto in the closed position of the sprayer.

### Background of the Invention

This type of rotary sprayer has different fields of application, agriculture being one of the most important. Known in this field are the tubular arches for attachment on a mobile tank that carry a plurality of sprayers for projecting the treatment liquids provided by the tank on the crops.

These sprayers have a shaft provided with an axial port that is in fluid communication with and mechanically connected to said arch and with a radial outlet on which there is mounted a rotary body provided with two radial outlets which may be selectively opposed to the radial outlet of the shaft to provide different types of spray or be disposed angularly displaced relative thereto, the sprayer then being in a closed position.

Since in this type of application is desirable to avoid dripping of the tap when the circuit is depressurized and the rotary body is in the open position, each sprayer is frequently equipped with a non-drip valve inserted between the axial inlet and the radial outlet defined in the shaft.

The known sprayers generally have various disadvantages among which there may be highlighted their mechanical complexity and the high cost thereof, to which there may be added the unreliability of the sealing devices thereof and the retaining of the latter in the chosen position, and which must be disassembled to change the seal or seals which exist of necessity between the shaft and the rotary body.

A further the problem of the present taps is that the rotary body gradually fails to position itself relative to the shaft when there is a loss of friction due to the wearing of the seals.

On the other hand, the non-drip valves used in the conventional sprayers use a membrane system that, besides significantly increasing the mechanical complexity and the total cost of the sprayer, runs a serious risk of breakage of this membrane.

### Description of the Invention

The selectable rotary sprayer of this invention is of the type first mentioned above, namely, it comprises: a shaft provided with an axial inlet and a radial outlet; a rotary body provided with two radial outlets; sealing means mounted between the shaft and the rotary body; and, optionally, a non-drip valve, and has constructive particularities for reducing the number of parts forming the present sprayers, with a consequent reduction of manufacturing cost, and for preventing the appearance of leaks between the shaft and the rotary body, with the possibility of voluntarily selection of the tightening or frictional force that is desired to prevent the undesired rotation of the rotary body.

According to the invention, the selectable rotary sprayer comprises:
- a shaft having, in correspondence with the end provided with the radial outlet, a frustoconical portion widening towards the free end of the shaft and for being received in the central cavity of the rotary body, and at the opposite end, a threaded portion for the attachment of a non-drip valve through which the liquid to be sprayed reaches the interior thereof;
- an annular seal mounted around the frustoconical portion of the shaft and having: a frustoconical inner surface that contacts in its totality with the frustoconical portion of the shaft; two radial orifices facing the radial outlets of the rotary body; appendices received in recesses defined in the central cavity of the rotary body preventing rotation of the annular seal inside said central cavity and ensuring the facing position of the radial orifices of the annular seal and the radial outlets of the rotary body, and
- a lock nut mounted on the rotary body and which, together with the annular seal, forms sealing and retaining means of the shaft relative to the rotary body.

The use of the annular seal in combination with the shaft provided with said frustoconical portion, constitutes a constructive solution of great simplicity which provides important advantages, such as the retaining of the shaft relative to the rotary body by means of only said annular seal and of the lock nut; an increase of the water tightness of the seal by effect of the pressure of the liquid itself, due to the direction of the taper of the seal; the possibility of adjusting the pressure of the seal to the extent of avoiding the leaks merely by acting on the lock nut; or the long life of the seal, on being subject to practically negligible wear due to the large area of contact with the shaft and also correction of the loss of friction due to wear of the annular seal.

According to the invention, the central cavity of the rotary body is provided internally with a cylindrical cavity for receiving the annular seal and a threaded inner portion for the assembly of the lock nut for said annular seal, so that when said nut is tightened, it is subjected to a compressive stress, increasing the pressure exerted by the inner and outer side surfaces thereof against the opposing surfaces of the shaft and the central cavity of the rotary body, respectively.

According to the invention, the non-drip valve mounted on the axial inlet of the shaft of the sprayer comprises a main body provided with an inlet port, an outlet port and two radially arranged concentric tubular appendices, connected together at one of the ends thereof and connected at the opposite ends to the inlet port and the outlet port.

Said non-drip valve comprises in addition: - a moveable body, mounted in the interior of the outer tubular appendix and provided centrally with a seal opposite the end of the inner tubular appendix; - a closing cap threadedly mounted on the end of the outer tubular appendix; and - a spring bearing with the opposite ends thereof against the inner surface of the closing cap and against the rear surface of the moveable body urging the seal against the inner tubular appendix of the non-drip valve.

Considering that in the assembly position of the sprayer the radial outlet of the shaft remains hidden in the interior of the rotary body, it is contemplated that the shaft is provided externally, in a visible place, with an indentation or mark indicating the angular position of said radial outlet, thereby facilitating for the user the positioning of the rotary body in the desired closed or open position.

### Description of the Figures

In order to complement the description that is being made and with a view to facilitating the understanding of the features of the invention, a set of drawings is annexed to the present specification in which the following is shown with an illustrative and nonlimiting nature:

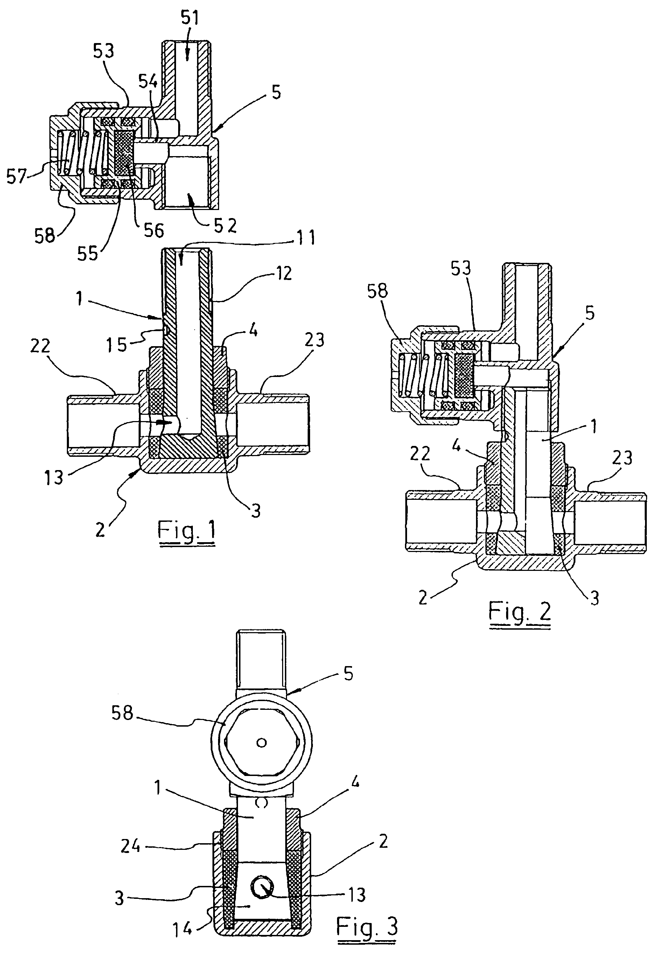

- Figure 1 is an elevation view of one embodiment of the rotary sprayer in cross section along a vertical plane; the non-drip valve being shown dismantled from the shaft and aligned therewith.
- Figure 2 is a view similar to the previous one with the non-drip valve in the assembled position on the shaft, said shaft being shown partially in cross section.
- Figure 3 is a side view of the sprayer of the previous figure, in which the rotary body, the annular seal and the lock nut are shown in vertical section.

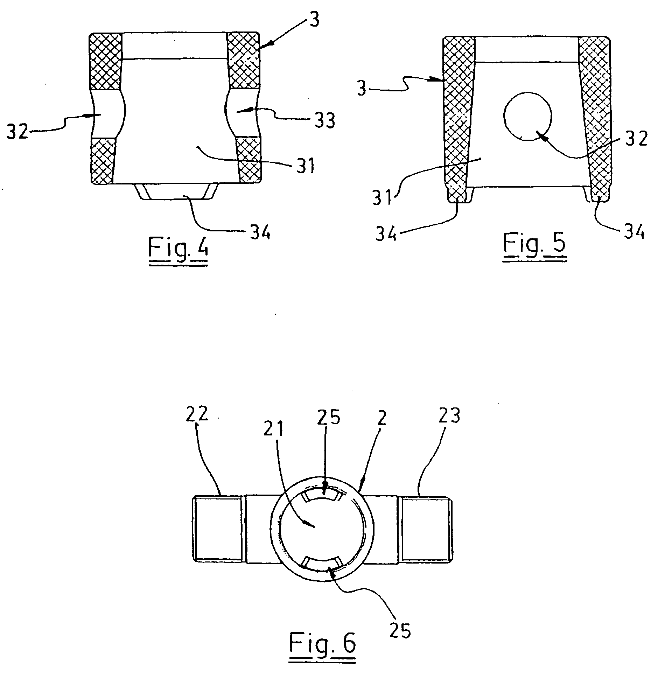

- Figures 4 and 5 are respectively an elevation and a side view of the annular seal vertically sectioned.
- Figure 6 is a plan view from above of the rotary body of the sprayer.

### Description of a Preferred Embodiment of the Invention

As is to be seen in the Figures, the selectable rotary sprayer is comprised of: a shaft (1), a rotary body (2), an annular seal (3), a lock nut (4) and a non-drip valve (5).

The shaft (1) has at one of its ends an axial inlet (11) and a threaded portion (12), at the opposite end a radial outlet (13) and a frustoconical portion (14) and at an intermediate region thereof an indentation or mark (15) indicating the angular position of the radial outlet (13).

The rotary body (2) is provided with a central cavity (21) and two radial outlets (22, 23) that may be optionally aligned with the radial outlet (13) of the shaft (1), when the said body (2) is rotated around said shaft, to place the sprayer in any one the two selectable open positions.

The rotary body (2) is provided in the central cavity (21) with a threaded inner portion (24) for the assembly of the lock nut (4) and, at the lower end thereof, two diametrically opposed recesses (25) to prevent rotation of the annular seal (3) in the interior thereof.

The annular seal (3) has: a frustoconical inner surface (31) that contacts in its totality with the frustoconical portion (14) of the shaft (1); two radial orifices (32, 33) facing radial outlets (22, 23) of the rotary body (2) and lower appendices (34) received in the recesses (25) defined in the central cavity (21) of the rotary body (2) to prevent rotation of the seal inside said central cavity (21), ensuring the face to face position the radial orifices (32, 33) of the annular seal and with the radial outlets (22, 23) of the rotary body.

As is to be seen in the Figures, when the nut (4) is tightened, it presses the annular seal (3) frontally whereby the latter acts with the inner and outer surfaces thereof against the frustoconical portion (14) of the shaft (1) and against the central cavity (21) of the rotary body. It is thereby ensured, on the one hand, that there are no leaks between the shaft (1) and the rotary body (2) and, on the other hand, that the shaft (1) cannot be released from the rotary body (2) due to the counterpositioning of the frustoconical surfaces (14) and (31) defined therein and to the action of the lock nut (4) against the annular seal (3).

The non-drip valve (5), to be attached on the threaded portion (12) of the shaft (1), comprises a main body provided with an inlet port (51), an outlet port (52) and two concentric, external and internal, tubular appendices (53, 54), respectively.

Both tubular appendices (53 and 54) are connected to each other at one end thereof and communicate through the opposite ends thereof with the inlet port (51) and the outlet port (52).

In the interior of the outer tubular appendix (53) there is mounted a moveable body (55) having a seal (56) that is held facing the end of the inner tubular appendix (54).

Said seal (56) is urged against the end of the inner tubular appendix (54) by the action of a spring (57) the ends of which bear against the closing cap (58), threadedly mounted on the end of the outer tubular appendix (53), and against the rear surface of the moveable body (55).

Said non-drip valve (5) is kept closed by the action of the spring (57) except when the pressure of the liquid to be sprayed, acting on the front surface of the moveable body (55), generates a force sufficient to overcome the resistance offered by sais spring (57), thereby opening the non-drip valve (5). The moveable body (55) has at least one O-ring to establish a seal between it and the outer tubular body (53), further preventing the exit of liquid to the outside.

Having sufficiently described the nature of the invention, as well as a preferred embodiment thereof, it is pointed out to the pertinent effects that the materials, size, shape, and arrangement of the described elements could be modified, provided that this does not mean any alteration of the essential features of the invention as claimed hereinafter.

## Claims

1. A selectable rotary sprayer of the type comprising a shaft (1) provided with an axial port (11) and a radial outlet (13) in fluid communication with each other, a rotary body (2) provided with two radial outlets (22, 23), that can selectively opposed to the radial outlet (13) of the shaft (1) to provide different types of spray or be disposed angularly out of phase relative to the former, the sprayer then being in a closed position, and sealing means mounted between the shaft (1) and the rotary body (2); **characterized in that** it comprises:
- a shaft (1) having, in correspondence with the end having the radial outlet (13), a frustoconical portion (14) widening towards the free end of the shaft (1) and for being received in the central cavity (21) of the rotary body (2) and, at the opposite end, a threaded portion (12) for optional attachment thereof to the fluid dispensing machine either directly or through a non-drip valve (5) by which the liquid to be sprayed reaches the interior thereof;
- an annular seal (3) mounted around the frustoconical portion (14) of the shaft (1) and having: a frustoconical inner surface (31) that contacts in its totality with the frustoconical portion (14) of the shaft (1); two radial orifices (32, 33) facing the radial outlets (22, 23) of the rotary body (2); appendices (34) received in recesses (25) defined in the central cavity (21) of the rotary body (2) preventing rotation of the annular seal (3) inside said central cavity (21) and ensuring the facing position of the radial orifices (32, 33) of the annular seal (3) with the radial outlets (22, 23) of the rotary body,
- a lock nut (4) mounted on the rotary body (2) and which, together with the annular seal (3), forms the sealing and retaining means of the shaft (1) relative to the rotary body (2).

2. The sprayer according to claim 1, **characterized in that** the central cavity (21) of the rotary body (2) has a threaded inner portion (24) for the assembly of the lock nut (4) of the annular seal (3) and, at the lower end thereof, two diametrically opposed recesses (25) for receiving the appendices (34) of the annular seal.

3. The sprayer according to claim 1, **characterized in that** the non-drip valve (5) comprises a main body provided with an inlet port (51), an outlet port (52) and two radially arranged concentric tubular appendices (53, 54), connected together at one of the ends thereof and communicating at the opposite ends with the inlet port (51) and the outlet port (52) respectively; said valve (5) further comprising: - a moveable body (55) mounted in the interior of the outer tubular appendix (53) and having at the center thereof a seal (56) opposite the end of the inner tubular appendix (54), - a closing cap (58) threadedly mounted on the end of the outer tubular appendix (54) and, - a spring (57) bearing with the opposite ends thereof against the inner surface of the closing cap (58) and against the rear surface of the moveable body (55), urging the seal (56) against the inner tubular appendix (54) of the non-drip valve.
